# EUROPEAN PATENT APPLICATION

(11) **EP 1 826 467 A1**
(43) Date of publication of application: **29.08.2007**
(21) Application number: 06425116.8
(22) Date of filing: 24.02.2006
(51) Int. Cl.: F16K 11/04, F16K 27/02

(54) **Multiple-way on-off valve**

(71) Applicant: Tiemme Raccorderie S.p.A., 25045 Castegnato (Brescia) (IT)
(72) Inventor: Murari, Stefano, 25080 Paitone (Brescia) (IT)
(74) Representative: Crippa, Paolo Ernesto

(57) **Abstract**

A multiple-way on-off valve (1) comprises a valve body (2) which internally delimits a flow chamber (3), an inlet coupling (4) connected to the valve body (2) and internally delimiting an inlet (7) that leads into the flow chamber (3), at least two outlet couplings (5, 6) connected to the valve body (2) and each delimiting an outlet (8, 9) that leads into the flow chamber (3), a gate (10) intended for closing the inlet (7) and actuating means (11, 12) connected to the gate (10) and intended for moving it from a closing position of said inlet and an opening position of said inlet. The inlet (7) ends into an aperture (13) delimited by an annular edge (14) protruding into the flow chamber (3) and the gate (10) comprises a sealing surface (15) intended for engaging the annular edge (14) for sealingly closing the aperture (13).

## Description

The present invention relates to an on-off valve, in particular a multiple-way on-off valve.

Fluid distribution lines, especially for water, are usually structured into various distribution levels starting from the water system, which supplies a high amount of water needed for meeting the requirements of all utilities in a predetermined region or zone of competence, up to the end utility, such as a tap in a living or industrial environment. In order to allow maintenance and changes to the waterworks, upstream of each distribution sublevel (such as in the pipe that delivers water to all utilities of a bathroom in a house) there is usually provided a so-called on-off valve which is only intended for cutting off the water flow to the concerned distribution sublevel (the bathroom), if needed.

Frequently, due to the limited space available or for a better organisation of the waterworks downstream of the on-off valve, the use of multiple outlet on-off valves is desired so as to obviate the need of having to provide for further branching points immediately downstream of the on-off valve itself. While on-off valves with one inlet only and one outlet only exhibit a very simple, sturdy, compact and inexpensive structure, multiple outlet valves available on the market and currently used an on-off valve exhibit a very complex structure (typically valves with a ball gate) and large overall dimensions. This increases the cost of the valve itself as well as the difficulties of laying of such valve in restricted spaces, such as in a thin wall of a house.

The complexity of multiple outlet valves is, among the other things, due to the fact that they are designed for more sophisticated applications, such as selection, adjustment or distribution of the water flow.

However, the simple structure of on-off valves with only one inlet and only one outlet is not easy to adapt to solutions with multiple ways but to the expense of large overall dimensions, increase of the complexity and a reduction of the sturdiness and reliability of the valve itself. Therefore, the solutions of the prior art to the problem of branching the waterworks immediately downstream of the on-off valve are limited to the use of the expensive ball valves or, as an alternative (and if allowed by the available space), to an on-off valve with a single outlet in combination with a T branching located immediately downstream of the valve.

The object of the present invention therefore is to devise a multiple-way on-off valve having a simple and sturdy structure, as well as very limited overall dimensions.

A further object of the present invention is to provide a versatile multiple-way on-off valve in view of the position and orientation of the pipes connected thereto.

A further object of the present invention is to provide a multiple-way on-off valve having a single sealing surface.

These and other objects are achieved by an on-off valve comprising:

- a valve body internally delimiting a flow chamber;

- an inlet coupling connected to the valve body and that internally delimits an inlet leading into the flow chamber;

- at least two outlet couplings connected to the valve body and each delimiting an outlet leading into the flow chamber;

- a gate intended for closing the inlet,

- actuating means connected to the gate and intended for moving it from a closing position of said inlet and an opening position of said inlet,

wherein the inlet ends into an aperture delimited by an annular edge protruding into the flow chamber and the gate comprises a sealing surface intended for engaging the annular edge for sealingly closing said aperture.

Further advantageous features and embodiments are defined in the dependent claims.

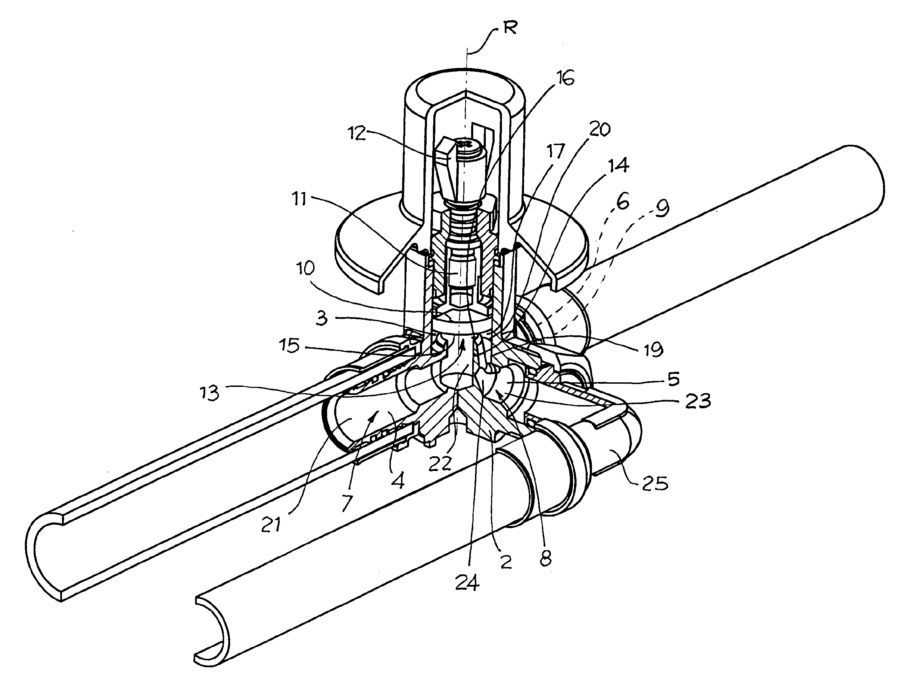

To better understand the invention and appreciate its advantages, an exemplary non-limiting embodiment thereof will now be described with reference to the annexed figure (fig. 1), which shows a partly cutaway perspective view of a multiple-way on-off valve according to the invention.

With reference to figure 1, reference numeral 1 globally denotes a multiple-way on-off valve. Valve 1 comprises a valve body 2 which internally delimits a flow chamber 3, an inlet coupling 4 integral with the valve body 2 and at least two outlet couplings 5, 6, also integral with the valve body 2. The inlet coupling 4 internally delimits an inlet 7 leading into the flow chamber 3 and each outlet coupling 5, 6 internally delimits respectively an outlet 8, 9 leading into the flow chamber 3.

A gate 10 is further arranged into the flow chamber 3 suitable for closing inlet 7 for obtaining valve 1 on-off function. To this end, actuating means are provided, such as a screw actuator 11 provided with a knob 12 for the hand operation of valve 1. These actuating means 11, 12 are connected to gate 10 so as to move it between a closing position and an opening position of inlet 7.

Advantageously, inlet 7 ends into an aperture 13 delimited by an annular edge 14 protruding into the flow chamber 3 and gate 10 itself comprises a seal 15 intended for engaging the annular edge 14 for sealingly closing aperture 13.

Thanks to the fact that the annular edge 14 protrudes (like, for example, a pipe portion) into the flow chamber 3, it is possible to arrange the sealing zone in an advantageous zone of the valve, both from the point of view of the overall dimensions and from the point of view of the valve reliability, and in particular, in a zone away from outlets 8, 9. The distance of the sealing zone from outlets 8, 9 allows obviating the use of ball gates and opens the way to simpler sealing solutions. Moreover, thanks to the protruding annular edge, the inlet can protrude into a space of the flow chamber directly affected by the exits of the outlets, with the result of a reduction of the overall dimensions of the valve.

According to an embodiment, the annular edge 14 forms one or, alternatively, multiple annular corners 16 suitable for forming a seal defined respectively along one or more annular lines.

Advantageously, the annular edge 14 defines a plane that divides the flow chamber into a liquid inlet portion 17 and a liquid outlet portion 18, wherein the movement of gate 10 is substantially limited within the liquid inlet portion 17 and outlets 8, 9 preferably lead into the liquid outlet portion 18 of the flow chamber 3. This spatial separation of the zone affected by the movement of gate 11 and of that affected by outlets 8, 9 allows an optimisation of the valve shape for each function separately, without having to keep into account any interactions (unavoidable in the case of ball valves).

Advantageously, the annular edge 14 delimits, along with a circumferential surface 19 of the flow chamber 3, an annular chamber 20 wherein outlets 8, 9 lead. The provision of the annular chamber 20 or, in other words, of an annular portion of the flow chamber 3 at outlets 8, 9 implies an especially even distribution of water towards such outlets, obviating to any noise of the valve in the case of large flows.

In accordance with a preferred embodiment, gate 10 is a flat gate substantially parallel to the plane defined by the annular edge 14 and facing thereto. With a further advantage, the valve body 2 substantially develops about a reference axis R and gate 10 is actuable by a translatory movement along this reference axis R and also the annular edge 14 is coaxial to the reference axis R. The structural and functional coaxiality of the valve increases its reliability and sturdiness and allows reducing the cross dimensions at the reference axis R.

Advantageously, the flow chamber 3 is substantially cylindrical in liquid inlet portion 17 thereof and substantially annular and tapered towards outlets 8, 9 in the liquid outlet portion 18 thereof. In this way, the flow section gradually and advantageously varies as regards the valve noiselessness.

A further aspect of the present invention provides for the inlet coupling 4 and the outlet coupling 5, 6 to substantially extend on a same passage plane and that, preferably, such passage plane is substantially perpendicular to the above reference axis R. This allows easy installation of the valve in the waterworks since all pipes connected to the valve remain into the plane, for example of a wall and knob 12 of the valve protrudes from such wall.

According to an embodiment of the invention, inlet 7 comprises an outer portion 21 which substantially lays into the passage plane and an inner portion 22 delimited by the annular edge 14 and substantially perpendicular to the outer portion 21. Similarly, each outlet 8, 9 advantageously comprises an outer portion 23 which substantially lays into the passage plane and an inner portion 24 common to all outlets 8, 9 which extends about the annular edge 14.

In accordance with a further development of the invention, at least one of the outlet couplings 5, 6 comprises an adjustable portion 25. Advantageously, such adjustable portion is turnably connected to the outlet coupling and preferably exhibits a substantially elbow or arc shape, which allows orientating a pipe connected to the adjustable portion outside the passage plane wherein the inlet 4 and outlet couplings 5, 6 normally lay.

The valve according to the present invention is preferably made of a metal material, such as steel, cast iron or brass and the shape of the passage chamber, in particular the taper of the annular edge, contribute to easier moulding and better surface finish than the body obtained by casting.

## Claims

1. A multiple-way on-off valve (1), comprising:
- a valve body (2)internally delimiting a flow chamber (3) ;
- an inlet coupling (4) connected to said valve body (2) and internally delimiting an inlet (7) leading into said flow chamber (3);
- at least two outlet couplings (5, 6) connected to said valve body (2) and each delimiting an outlet (8, 9) leading into said flow chamber (3);
- a gate (10) suitable for closing said inlet (7);
- actuating means (11, 12) connected to said gate (10) and suitable for moving it from a closing position of said inlet and an opening position of said inlet,
**characterised in that** said inlet (7) ends into an aperture (13) delimited by an annular edge (14) protruding into said flow chamber (3) and said gate (10) comprises a sealing surface (15) intended for engaging said annular edge (14) for sealingly closing said aperture (13).

2. An on-off valve (1) according to claim 1, wherein said annular edge (14) forms an annular corner (16) suitable for forming a seal defined along an annular line.

3. An on-off valve (1) according to claim 1 or 2, wherein said annular edge (14) defines a plane that divides the flow chamber (3) into a liquid inlet portion (17) and a liquid outlet portion (18), wherein the movement of said gate (10) is substantially limited within the liquid inlet portion (17) and outlets (8, 9) lead into the liquid outlet portion (18) of the flow chamber (3).

4. An on-off valve (1) according to any one of the previous claims, wherein said annular edge (14) delimits, along with a circumferential surface (19) of the flow chamber (3), an annular portion (20) of said flow chamber (3) and wherein said outlets (8, 9) lead into said annular portion (20).

5. An on-off valve (1) according to any one of the previous claims, wherein said gate (10) is a flat gate substantially parallel to the plane defined by the annular edge (14) and facing thereto.

6. An on-off valve (1) according to any one of the previous claims, wherein said valve body (2) develops about a reference axis (R) and said gate (10) is actuable by a translatory movement along said reference axis (R) and said annular edge (14) is coaxial to the reference axis (R).

7. An on-off valve (1) according to any one of the previous claims, wherein said flow chamber (3) is substantially cylindrical in the liquid inlet portion (17) thereof and substantially annular and tapered towards the outlets (8, 9) in the liquid outlet portion (18) thereof.

8. An on-off valve (1) according to any one of the previous claims, wherein said inlet coupling (4) and said outlet couplings (5, 6) substantially extend in a same passage plane.

9. An on-off valve (1) according to claims 6 and 8, wherein said passage plane is substantially perpendicular to said reference axis (R).

10. An on-off valve (1) according to any one of the previous claims, wherein:
- said inlet (7) comprises an outer portion (21) which substantially lays into said passage plane and an inner portion (22) delimited by said annular edge (14) and perpendicular to the outer portion (21); and
each of said outlets (8, 9) comprises an outer portion (23) which substantially lays into said passage plane and an inner portion (24) common to all outlets (8, 9) which extends about said annular edge (14).

11. An on-off valve (1) according to any one of the previous claims, wherein at least one of the outlet couplings (5, 6) comprises an adjustable portion (25).

12. An on-off valve (1) according to any one of the previous claims, wherein said adjustable portion (25) is turnably connected to the outlet coupling (5, 6).

13. An on-off valve (1) according to any one of the previous claims, wherein said adjustable portion (25) exhibits a substantially elbow shape.

14. An on-off valve (1) according to any one of the previous claims, wherein the actuating means comprise screw actuating means (11) provided with a knob (12) for hand actuation.

## Amended claims

### Amended claims in accordance with Rule 86(2) EPC.

**1.** A multiple-way on-off valve (1), comprising:
- a valve body (2)internally delimiting a flow chamber (3);
- an inlet coupling (4) connected to said valve body (2) and internally delimiting an inlet (7) leading into said flow chamber (3);
- at least two outlet couplings (5, 6) connected to said valve body (2) and each delimiting an outlet (8, 9) leading into said flow chamber (3);
- a gate (10) suitable for closing said inlet (7);
- actuating means (11, 12) connected to said gate (10) and suitable for moving it from a closing position of said inlet and an opening position of said inlet,
wherein said inlet (7) ends into an aperture (13) delimited by an annular edge (14) protruding into said flow chamber (3) and said gate (10) comprises a sealing surface (15) intended for engaging said annular edge (14) for sealingly closing said aperture (13)
and wherein said inlet (7) comprises an outer portion (21) and an inner portion (22) delimited by said annular edge (14) and perpendicular to the outer portion (21); and
each of said outlets (8,9) comprises an outer portion (23) having a straight axis, incident to said inner portion (22) of the inlet (7).

**2.** An on-off valve (1) according to claim 1, wherein said annular edge (14) forms an annular corner (16) suitable for forming a seal defined along an annular line.

**3.** An on-off valve (1) according to claim 1 or 2,
wherein said annular edge (14) defines a plane that divides the flow chamber (3) into a liquid inlet portion (17) and a liquid outlet portion (18), wherein the movement of said gate (10) is substantially limited within the liquid inlet portion (17) and outlets (8, 9) lead into the liquid outlet portion (18) of the flow chamber (3).

**4.** An on-off valve (1) according to any one of the previous claims, wherein said annular edge (14) delimits, along with a circumferential surface (19) of the flow chamber (3), an annular portion (20) of said flow chamber (3) and wherein said outlets (8, 9) lead into said annular portion (20).

**5.** An on-off valve (1) according to any one of the previous claims, wherein said gate (10) is a flat gate substantially parallel to the plane defined by the annular edge (14) and facing thereto.

**6.** An on-off valve (1) according to any one of the previous claims, wherein said valve body (2) develops about a reference axis (R) and said gate (10) is actuable by a translatory movement along said reference axis (R) and said annular edge (14) is coaxial to the reference axis (R).

**7.** An on-off valve (1) according to any one of the previous claims, wherein said flow chamber (3) is substantially cylindrical in the liquid inlet portion (17) thereof and substantially annular and tapered towards the outlets (8, 9) in the liquid outlet portion (18) thereof.

**8.** An on-off valve (1) according to any one of the previous claims, wherein said inlet coupling (4) and said outlet couplings (5, 6) substantially extend in a same passage plane.

**9.** An on-off valve (1) according to claims 6 and 8,
wherein said passage plane is substantially perpendicular to said reference axis (R).

**10.** An on-off valve (1) according to any one of the previous claims, wherein:
- said inlet (7) comprises an outer portion (21) which substantially lays into said passage plane and an inner portion (22) delimited by said annular edge (14) and perpendicular to the outer portion (21); and
each of said outlets (8, 9) comprises an outer portion (23) which substantially lays into said passage plane and an inner portion (24) common to all outlets (8, 9) which extends about said annular edge (14).

**11.** An on-off valve (1) according to any one of the previous claims, wherein at least one of the outlet couplings (5,6) comprises an adjustable portion (25).

**12.** An on-off valve (1) according to any one of the previous claims, wherein said adjustable portion (25) is turnably connected to the outlet coupling (5, 6).

**13.** An on-off valve (1) according to any one of the previous claims, wherein said adjustable portion (25) exhibits a substantially elbow shape.

**14.** An on-off valve (1) according to any one of the previous claims, wherein the actuating means comprise screw actuating means (11) provided with a knob (12) for hand actuation.
